Europäisches Patentamt

(19) European Patent Office

Office européen des brevets

(11) Publication number : **0 436 553 B1**

(12) **EUROPEAN PATENT SPECIFICATION**

(45) Date of publication of patent specification :
17.03.93 Bulletin 93/11

(51) Int. Cl.⁵ : **F02D 41/34, F02D 41/26**

(21) Application number : **89908992.4**

(22) Date of filing : **03.08.89**

(86) International application number :
**PCT/EP89/00925**

(87) International publication number :
**WO 91/02148 21.02.91 Gazette 91/05**

(54) **DEVICE FOR PRODUCING A DESIRED VALUE OF A CONTROL PARAMETER OF AN INTERNAL COMBUSTION ENGINE.**

(43) Date of publication of application :
17.07.91 Bulletin 91/29

(45) Publication of the grant of the patent :
17.03.93 Bulletin 93/11

(84) Designated Contracting States :
**DE FR GB**

(56) References cited :
**EP-A- 59 586**
**DE-A- 3 540 813**
**US-A- 4 265 200**
**US-A- 4 596 221**

(73) Proprietor : **ROBERT BOSCH GMBH**
**Postfach 30 02 20**
**W-7000 Stuttgart 30 (DE)**

(72) Inventor : **FENCHEL, Reinhard**
**Turnstr. 31**
**W-7260 Calw-Altburg (DE)**
Inventor : **KULL, Hermann**
**Novalisstaffel 1**
**W-7000 Stuttgart 1 (DE)**
Inventor : **SEHER, Dieter**
**Zabergäustr. 10**
**W-7129 Ilsfeld (DE)**
Inventor : **ENGEL, Gerhard**
**Burghaldenweg 8 A**
**W-7000 Stuttgart 30 (DE)**
Inventor : **BIRK, Manfred**
**Oberbrunnweg 8/2**
**W-7032 Sindelfingen (DE)**

EP 0 436 553 B1

Jouve, 18, rue Saint-Denis, 75001 PARIS

## Description

The invention relates to a device for producing a desired value of an engine control parameter of an internal combustion engine in accordance with the preamble to claim 1.

Such a device is known from EP-A 59 586 which is utilizing a digital microprocessor for controlling the timing mechanism. A plurality of timing maps are provided, for different modes of engine operation. The timing maps distinguish between steady state maps and an acceleration maps. Switching between these maps is performed by coupled gates, which are controlled by a gate control for changing over from either operation mode to the other.

US-A-4 596 221 teaches for timing advance control the use of the rate of change of power for changing from one mode to the other. This document teaches that for a switch from the dynamic mode, in which the engine power changed significantly back to the static mode, in which the engine power only varies slightly, the timing values should only be gradually changed.

DE-A-35 40 813 shows a device which is concerned with adjustment of the injection timing of a diesel engine equipped with electronic diesel control (EDC).

The purpose of the device described in this document is to retard the fuel injection in the event of a rapid increase of power and so avoid or mitigate the temporary increase in engine noise which would otherwise take place. The injection retardation is fixed in terms of crankshaft angle and is sudden, although the subsequent advance is gradual and its onset is delayed. Also, this device cannot retard the injection timing in the event of a sudden decrease in engine power and such a facility is in any case not needed for the purpose of reducing engine noise.

It is known to adjust the injection timing in a diesel engine to achieve optimum fuel consumption. It is also known to adjust the injection timing so as to minimize emission of pollutants in the exhaust gas. It is furthermore known with EDC to store a characteristic field of the desired injection timing in relation to one or more engine operating parameters, such as desired injected fuel quantity and engine speed.

In the steady state, i.e. when running at a substantially constant speed and load, the pollutant emission when running with adjustment for optimum fuel consumption may still be within prescribed European standards although not the minimum obtainable in the steady state. Also, steady state running is usually only possible when driving outside towns, where pollutant emission is less critical. However, there is a likelihood of there being excessive or objectionable pollutant emission when increasing or decreasing the engine load (injected fuel quantity) with the injection timing adjusted for optimum fuel consumption.

## Advantages of the invention

Optimum fuel consumption in the steady state and acceptably low pollution emission when accelerating and decelerating can be obtained by adopting the features of the characterising clause of claim 1.

Thus, it is advantageous, when the device is used for injection timing, to store respective characteristic fields of basic injection timing values for optimum fuel consumption and for minimun pollutant emission respectively by adopting the measures of claim 2.

To minimise the risk of any jerkiness, it is preferable that the changeover from either mode to the other to be gradual, in accordance with claim 3.

The command signal for triggering changeover between the static and dynamic modes can be obtained by means of the features of claim 4. The feature of claim 5 is useful for preventing too-frequent changes from one mode to the other.

It is recommended to compensate for changes in cooling water temperature in accordance with claim 6 and to compensate for changes in barometric pressure (altitude) in accordance with claim 7.

Usually, the desired value ($SB_{des}$) is compared with a measured or actual value ($SB_{act}$) in a closed servo-loop which contains a PI controller for operating the servo itself. In the case of a four-stroke multi-cylinder engine, the actual value of the control parameter (SB), such as the injection timing, can only be measured once for every two engine revolutions. The PI controller must therefore be designed for a slow response time, particularly to prevent hunting or overshoot when the engine is idling.

To avoid the problem that there is no measured actual value ($SB_{act}$) available during engine starting and when the vehicle is overrunning the engine, e.g. when going downhill, it is extremely advantageous to provide for open-loop "anticipatory" control in accordance with claim 8.

By adopting the measures of claim 9, the anticipatory control, in the case of injection timing, can itself include timing maps for static and dynamic modes.

A separate timing map for engine starting can be used in accordance with claim 10.

## Drawings

The invention is further described, by way of example, with reference to the accompanying drawings, in which:

Fig.1 is a block circuit diagram of one embodiment of device for producing a basic desired value for the adjustment of the injection timing of a diesel engine,

Fig.2 is a circuit detail of the device of Fig.1,

Fig.3 is a circuit diagram, similar to Fig.1 but showing a second embodiment,

Fig.4 is a circuit detail of a modified part of the circuit for producing an adjusting factor,

Fig.5 is a circuit detail of a further embodiment of the part of the circuit for producing an adjusting factor,

Fig. 6 is a modification to the block circuit diagram of Fig.1 in which account is taken of engine temperature and atmospheric pressure (altitude), and

Fig.7 is a block diagram of a device for adjusting the timing of fuel injection in a diesel engine.

Description of the preferred embodiment

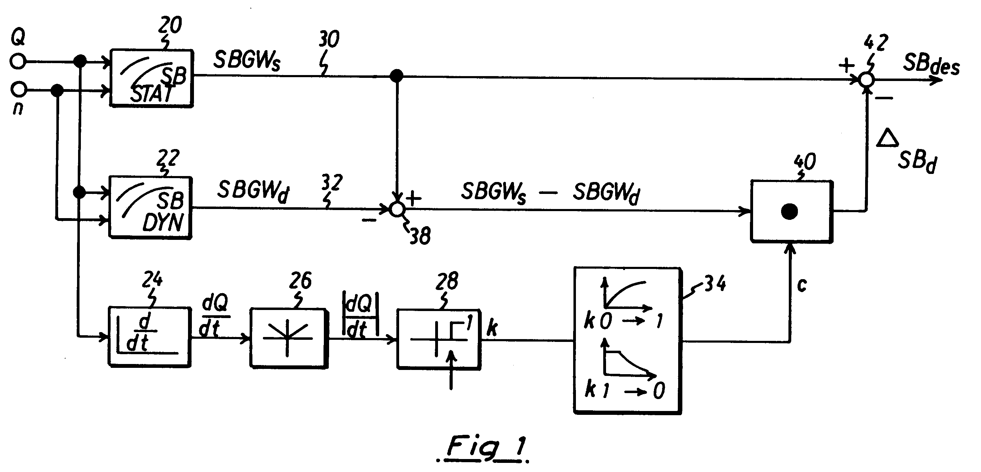

A device for adjusting the injection timing (the beginning of fuel injection) in a diesel engine includes a device for producing a desired value ($SB_{des}$) of the injection timing angle, as shown in Fig.1. Parallel branches (24,26) comprise appropriate memory zones (20,22) of an electronic diesel control (EDC). The characteristic field in zone 20 stores basic values SBGWs of the injection timing for the steady state or static running mode of the engine for various values of engine power, as represented by the injected fuel quantity Q, and the engine speed n. In other words, for the static mode in which the injected fuel quantity is hardly varying ($\frac{dQ}{dt} \approx 0$), the zone 20 for the static mode characteristic field or timing map for the steady state delivers an appropriate basic value SBGWs determined empirically to adjust the injection timing for maximum fuel economy, in accordance with the prevailing injected fuel quantity Q and engine speed n. Similarly for the dynamic running mode in which the injected fuel quantity Q is rising or falling significantly ($\frac{dQ}{dt} \gg 0$ or $\frac{dQ}{dt} \ll 0$), the zone 22 for the dynamic mode characteristic field or timing map for the transient state delivers an appropriate basic value SBGWd determined empirically to adjust the injection timing for minimum pollutant content of the exhaust gases of the engine.

The static mode basic timing value SBGWs is fed by the branch 30 to an adding input of a subtractor 42 whose outout is the desired value $SB_{des}$ of the injection timing. The branch 32 contains a subtractor 38 and a multiplier 40. The static and dynamic mode basic values SBGWs and SBGWd are applied respectively to adding and subtracting inputs of the subtractor 38 which feeds the difference SBGWs - SBGWd to the multiplier 40. This difference is multiplied by an adjusting factor c to produce an adjustment value $\Delta SBd$ for the non-steady state or dynamic mode and the adjustment value is fed to the subtracting input of the subtractor 42.

To obtain an adjustment trigger signal k which indicates which of the basic values SBGWs and SBGWd should be used to determine the injection timing, the injected fuel quantity Q is differentiated in a differentiator 24, the outout $\frac{dQ}{dt}$ of the latter is passed to a magnitude former 26 which produces the magnitude

$$\left| \frac{dQ}{dt} \right|$$

of $\frac{dQ}{dt}$ and this magnitude is fed to a comparator 28 at whose output appears the adjusting trigger signal k. This signal k = 0 when $\frac{dQ}{dt} \approx 0$ but when the rate of change in the injected fuel quantity becomes significant, the magnitude

$$\left| \frac{dQ}{dt} \right|$$

exceeds the low threshold of the comparator 28 whereby k = 1.

The adjusting trigger signal k could be fed directly to the multiplier 40 as the adjusting factor c. Thus, when c = 0, $\Delta SBd = 0$ and $SB_{des}$ = SBGWs. When c = 1, $\Delta SBd$ = SBGWs - SBGWd, whereby $SB_{des}$ = SBGWd. However, to avoid a sudden change in $SB_{des}$ when changing from the static to the dynamic mode and vice versa, the factor c when changed, changes smoothly from one value to another. Furthermore, when k changes from 1 to 0, the factor c only commences to change from 1 to 0 after a delay time t. This prevents short term switching from the dynamic mode to the static mode. A calculating circuit 34 is provided for producing the factor c.

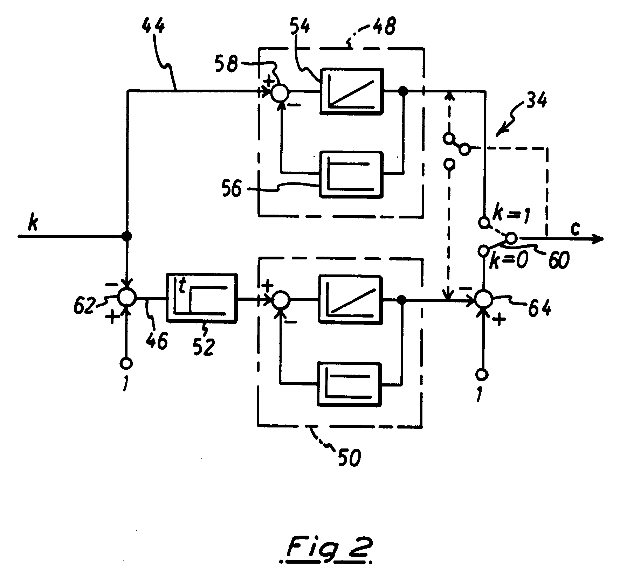

The calculating circuit 34 is shown somewhat more fully in Fig.2. It comprises two branches 44,46, each containing a circuit 48,50 having a delaying function. In addition, the branch 46 contains a delay timer 52 for producing the delay time t. Each function circuit 48,50 contains an integrator 54 and a proportional device 56 connected between the output side of the integrator 54 and the subtracting input of a subtractor 58 at the input side of the integrator 54. The output of each function circuit 48,50 thereby rises exponentially from 0 to 1 when its input is suddenly raised from 0 to 1.

The signal k is applied directly to the positive input of the subtractor 58 in the branch 44, which is effective when k changes from 0 to 1. The output of the function circuit 48 in the branch 44 is connected to one pole of an electronic changeover switch 60 at whose output the factor c appears. The electronic switch 60 is changed over from its position shown in full lines to its position shown in dotted lines when the signal k changes from 0 to 1 and vice versa.

The branch 46 is shown as containing inverters 62,64 in the form of subtractors to, whose adding inputs 1's are applied. When the signal k changes from 1 to 0, the timer 52 is triggered and, after the delay t, its output changes from 0 to 1. When this happens, the output of the function circuit 50 changes exponentially from 0 to 1 whereby the output of the inverter 64, which is connected to the second pole of the electronic changeover switch 60 falls exponentially from 1 to 0.

It may happen that the signal k changes again from 0 to 1 before the factor c has reached the value 0 following a previous change in k from 1 to 0. To avoid a sudden jump in the value of the factor c when the switch 60 changes over, it must be ensured that the value on the output of the function circuit 48 is equal to the value of the factor c immediately before changeover of the switch 60. Therefore, when the signal k changes from 0 to 1, the actual value of c appearing at the output of the switch 60 immediately before changeover of the switch 60 is stored at the output side of the delay circuit 48, as indicated diagrammatically by dotted lines. Similarly, when the signal k changes from 1 to 0, the actual value of c appearing at the output of the switch 60 immediately before changeover of the switch is stored at the output side of the delay circuit 50. It is thereby ensured that there is no sudden change in the value of the factor c when the switch 60 changes over, even should the value of c lie between 0 and 1 immediately before the changeover takes place.

In Fig.1, $SB_{des}$ = (1-c).SBGWs + c.SBGWd. Therefore, when the engine power, as represented by the injected fuel quantity Q, is increased or decreased significantly, the factor k changes from 0 to 1 but the desired injection timing $SB_{des}$ changes over exponentially from the basic static value SBGWs for good fuel economy to the basic dynamic value SBGWd for low exhaust emission. When the engine power is no longer increasing or decreasing significantly, the signal k changes from 1 to 0 but desired timing $SB_{des}$ changes exponentially, but only after elapse of the timer delay t, from the dynamic value SBGWd to the static value SBGWs. The delay t in returning to the static mode helps to ensure that, in towns, the engine is for the most part operating in its mode for minimum exhaust emission because the driver will have need to accelerate and decelerate frequently. Out of towns, where exhaust emission is not so critical, the engine can run in its most economical mode, since the driver will be driving at a substantially constant speed.

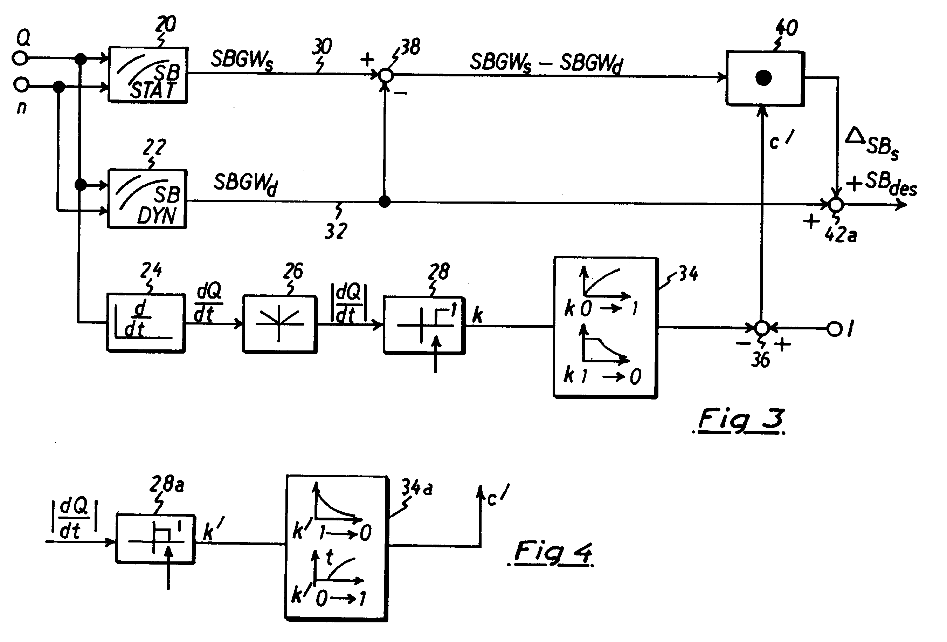

In Fig. 3 parts like of Fig.1 are denoted by like reference numerals. Fig.3 differs from Fig.1 in that SBGWd is fed to an adder 42a at whose output appears the desired value $SB_{des}$ of the injection timing. The subtractor 38 and the multiplier 40 are, in this embodiment, arranged in the branch 30 containing the store 20 for the static mode timing map. The multiplier 40 is arranged between the output of the subtractor 38 and the second adding input of the adder 42a. The output of the calculating circuit 34 is fed to an inverter shown in the form of a subtractor 36 to whose adding input a 1 is applied. The adjusting factor c' appears at the output of the subtractor 36 and is fed to the multiplier 40. It is thereby achieved that the adjusting factor c' falls gradually from 1 to 0 after the signal k changes from 0 to 1 and vice versa. In Fig.3 SBs = c' (SBGWs-SBGWd) so that $SB_{des}$ = SBGWs in the static mode and $SB_{des}$ = SBGWd in the dynamic mode, as in the first embodiment and the change from one mode to the other is gradual, with a delay being introduced when changing back from the dynamic mode to the static mode.

Fig.4 indicates a modification to the calculating circuit 34a wherein the factor c' falls exponentially from 1 to 0 when the output k' of the comparator 28a changes from 1 to 0 and the factor c', after a delay t, rises exponentially from 0 to 1 when the output k' of the comparator 28a changes from 0 to 1. The comparator 28a changes its output k' from 1 to 0 as soon as

$$\left|\frac{dQ}{dt}\right|$$

exceeds the relatively low threshold. The adjusting factor c' is thus obtained directly from the output of the calculating circuit 34a and the subtractor 36 with the 1 input is omitted.

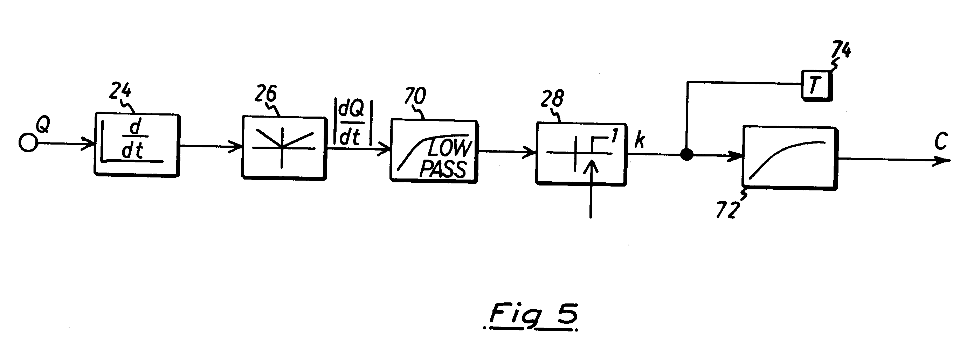

Fig.5 shows an embodiment in which a low pass filter 70 is arranged between the magnitude former 26 and the comparator 28. The response of the comparator to a rapidly increasing

$$\left|\frac{dQ}{dt}\right|$$

is thereby delayed. This prevents momentary actuations of the accelerator pedal from effecting a changeover from one characteristic field to the other. The low pass filter 72 and delay 74 of the calculating circuit are shown diagrammatically.

An advantage of the circuits thus far described is that the lowest possible fuel consumption is obtained during steady cruising, yet emission regulations can be complied with during transient changes in the driving conditions (operation of the accelerator pedal to increase or decrease vehicle velocity and/or change gear).

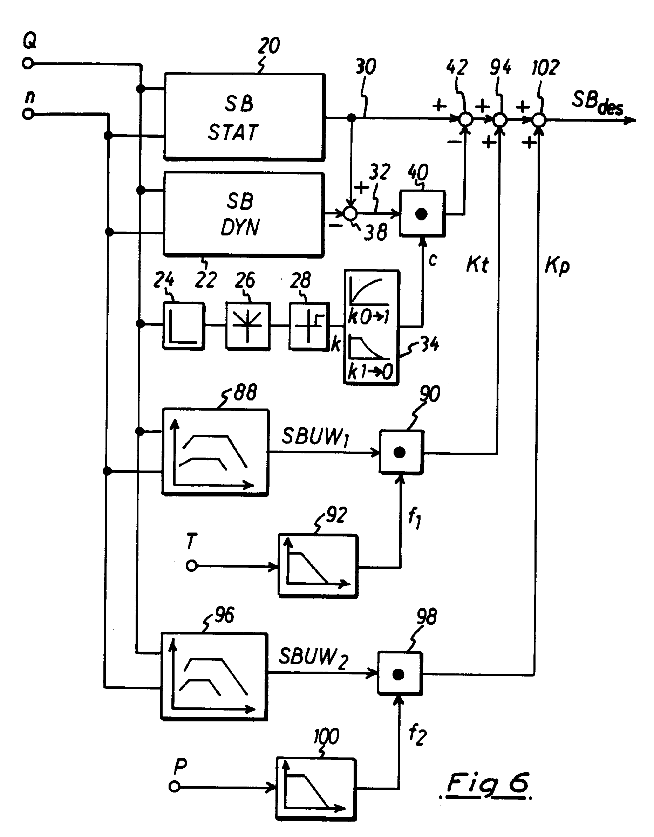

Fig.6 shows an adaptation of the circuit of Fig.1 to enable the injection timing to be corrected for water temperature T and for atmospheric air pressure P or altitude. The components 20 to 42 of Fig.1 are again shown in Fig.6. The timing maps in the stores 20 and 22 are those appropriate to the temperature of the cooling water when the engine has warmed up and to the normal atmospheric pressure when the vehicle is at or close to sea level.

A basic injection advance correction SBUW1 to the static basic value SBGWs for a temperature differecne $T_h$-$T_c$ between the normal running temperature $T_h$ and the usual cold temperature $T_c$ (i.e. the temperature when the vehicle has been left standing for a considerable time) is obtained from a stored characteristic field or map 88 in dependence on injected fuel quantity Q and engine speed n. This is then multiplied by a temperature dependent factor $f_1$ in a multiplier 90. The temperature factor $f_1$ is obtained from a stored characteristic curve 92 in dependence on the actual water temperature T. For $T = T_c$, $f_1 = 1$. The actual correction Kt = $f_1$ x SBUW1 is supplied to an adder 94 inserted beyond the multiplier 42, whereby the fuel injection is advanced when the engine is cold, to take account the delayed onset of combustion. In very cold conditions $T < T_c$ and the factor $f_1 > 1$.

To compensate for altitude, a correction SBUW2 for a nominal or basic altitude as measured by a barometric pressure $P_h$ as compared with standard atmospheric pressure $P_o$, is obtained from a stored characteristic field or map 96 in dependence on Q and n. SBUW2 is then multiplied in a multiplier 98 by a factor $f_2$ dependent on the actual altitude or atmospheric pressure. The altitude factor $f_2$ is obtained from a logic or stored characteristic curve 100 such that

$$f_2 = \frac{P_o - P}{P_o - P_h}.$$

The injection advance to compensate for the increased ignition delay experienced at altitude is then achieved by supplying a correction kp = $F_2$ x SBUW2 to an adder 102 beyond the adder 94.

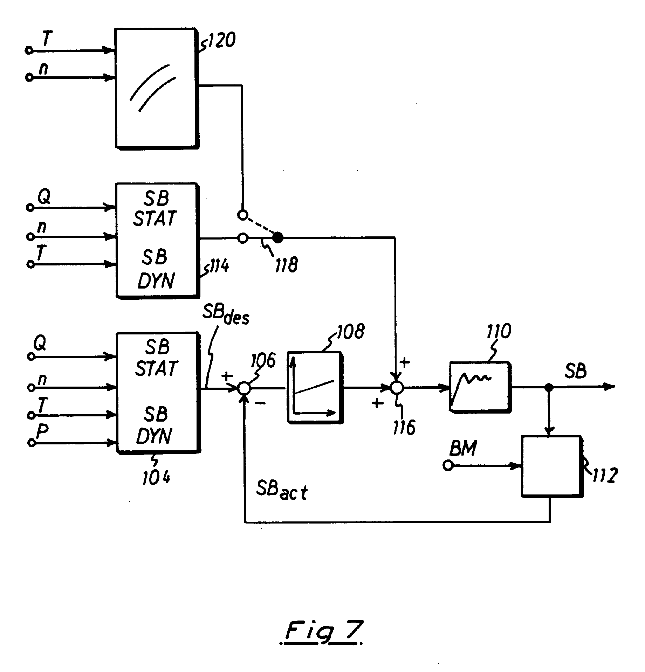

The desired injection timing $SB_{des}$ appears at the output of the adder 102. It is used to control the injection timing as illustrated in Fig.7.

In Fig.7, the circuit of Fig.6 is denoted as a desired value form 104. It is responsive to engine power (injected fuel quantity Q), engine speed n, water temperature T and barometric pressure p. The desired value $SB_{des}$ of the timing angle is fed to a servo loop which includes a comparator 106, a controller 108, a timing servo 110 and an actual value transducer 112. The comparator 106 is shown as a subtractor which subtracts the actual injection timing value $SB_{act}$ from the desired value $SB_{des}$ and delivers the resulting error signal $\Delta SB$ - $SB_{des}$ - $SB_{act}$ to the controller 108. The latter is a PI controller and its outqut operates the servo 110. The servo 110 is an electro-fluid device or a solenoid device with a mechanical output by which the timing angle of the fuel injection pump is physically adjusted.

Because there are phenomena which affect the actual onset of fuel injection as compared with that set at the fuel injection pump, the actual value $SP_{act}$ of the fuel injection timing SB is measured at one of the fuel injection nozzles by means of the actual value transducer 112 which senses lifting of the valve needle in the injection nozzle and measures the crankshaft angle between the valve lifting and a reference marks BM on the crankshaft. The reference mark BM is a signal delivered each time the engine crankshaft passes through a predetermined angular position. The servo loop containing the PI controller 108 is thereby enabled to compensate for slow changes or long-term errors due to the effect of fuel temperature on the compressibility of the fuel which affects the nozzle opening pressure.

Because the transducer 112 can only deliver an actual value $SB_{act}$ once for every two revolutions of the crankshaft (for a four-stroke engine), there is a particularly long delay between effecting an adjustment of the timing angle and receiving a feedback signal responsive to the adjustment when the engine is running slowly (idling). The PI controller 108 must therefore be designed to give a slow response to avoid hunting. When starting the engine or when the vehicle is overrunning the engine (using the engine as a retarder or brake), there is no fuel injection and accordingly the transducer 112 cannot deliver an actual value $SB_{act}$. Therefore the PI controller 108 cannot deliver an output to adjust the servo 110 until fuel injection commences. Because of the slow response, there is a long delay, possibly up to 1 sec, between the first delivery of fuel to the engine cylinders and the appropriate adjustment of the injection timing to the desired value $SB_{des}$. It is therefore advisable to provide an open-loop servo system or by-pass which can adjust the injection timing to a suitable value in advance of any fuel injection actually taking place. This may be called a "pre-control" or "anticipatory control".

The anticipatory control comprises a desired value former 114 which may be constructed in the same way as the desired value former 104 shown in Fig.6. Thus, it also may contain two timing maps respectively for static and dynamic modes and it may have provision for correction for changes in engine temperature. However, compensation for barometric pressure (altitude) can be omitted, since the effect of barometric pressure changes is relatively small and can be compensated for when the closed loop takes over. The output of the desired value former 114 is fed to an adder 116 arranged in the closed servo loop between the PI controller 108 and the servo 110. The anticipatory control thereby adjusts the injection timing to a suitable value in the absence of any output from the PI controller 108.

When starting the engine, special conditions arise, particularly when the engine is cold and the desired value supplied by the desired value former 114 may not be appropriate. Therefore, for starting purposes, the anticipatory control includes a starting timing map 120. On starting, an electronic switch 118 is changed over to connect the timing map 120 to the adder 116 instead of the desired value former 114. The timing map 120 produces a desired value of the injection timing dependant only on engine temperature (coolant temperature) and engine speed and the servo 110 adjusts the injection timing accordingly. As soon as the engine has started, e.g. as soon as the starting speed or a slow idling speed has been reached, the switch 118 changes over to its position shown in full lines. In the meantime, the closed servo-loop has become effective to control the injection timing.

## Claims

1. A device for producing a desired injection timing value ($SB_{des}$) of an internal combustion engine equipped with an electronic control, comprising branches (30, 32) containing respective stores in which are stored characteristic fields (20, 22) pertaining to different basic injection timing values (SBGWs, SBGWd) for respective operating modes of the engine in accordance with at least one engine operating parameter (Q, n), at least one branch (30 or 32) contains an arithmetic device (40) for changing over from either operating mode to the other, a first stored characteristic field (20) provides basic timing injection timing values (SBGWs) for optimum fuel consumption for a static mode in which the engine power (Q) is constant or only varies slightly and a second stored characteristic field (22) provides basic injection timing timing values (SBGWd) for minimum exhaust gas pollution for a dynamic mode in which the engine power (Q) is changing significantly, characterised in that the changeover from the static mode to the dynamic mode is gradually so that the injection timing value only change gradually.

2. Device according to claim 1, characterised by a device (24) for ascertaining the magnitude of the rate of change (dQ/dt) of power and a comparator (28) responsive to a magnitude of the rate of change (dQ/dt) of power higher than a relatively low miniumum for changing over from one basic value (SBGWs) to the other (SBGWd) and vice versa.

3. Device according to claim 2, characterised in that a low pass filter (70) is arranged at the input side of the comparator (28) to prevent the latter from responding to short duration changes in engine power.

4. Device according to any preceding claim, characterised in that a temperature correction (Kt) is made to the supplied basic value (SBGWs or SBGWd) in deriving the desired value ($SB_{des}$).

5. Device according to any preceding claim, characterised in that an altitude correction (Kp) is made to the supplied basic value (SBGWs or SBGWd) in devising the desired value ($SB_{des}$).

6. Device according to any preceding claim, characterised by an anticipatory control or by-pass (114) operable by means of an open loop to provide the engine control parameter (SB) when no feedback signal or actual value ($SB_{act}$) is available for comparison with the desired value ($SB_{des}$) in a closed servo-loop which includes a controller (108), particularly a PI controller, for controlling an output servo (110) which adjust the control parameter (SB).

7. Device according to claim 6, characterised in that the anticipatory control (114) also itself comprises a device according to any of claims 1 to 6.

8. Device according to claim 6 or 7, characterised in that the anticipatory control contains a stored characterised field for producing a desired value of the engine control parameter (SB) responsively to at least one engine operating parameter (Q,T) for starting purposes.

## Patentansprüche

1. Vorrichtung zum Erzeugen eines Einspritzbeginns-Sollwertes ($SB_{des}$) eines Verbrennungsmotors mit einer elektronischen Regelung des Einspritzbeginns, die zwei Zweige umfassen (30,32), mit Speichern, in denen Kennfelder (20,22) für verschiedene Einspritzbeginn-Grundwerte (SBGWS, SBGWd) für die jeweiligen Betriebsarten des Motors abhängig von wenigstens einem Motor-Betriebsparameter (Q, n) abgespeichert sind, wobei zumindest einer der Zweige (30 oder 32) ein arithmetisches Mittel (40) zum Umschalten von der einen Betriebsart in die andere enthält, mit einem ersten Kennfeld (20) mit Einspritzbeginn-Grundwerten (SBGWs) für optimalen Kraftstoffverbrauch für eine statische Betriebsart mit im wesentlichen konstanter oder nur wenig varriierender Motorlast (Q) und mit einem zweiten Kennfeld (22) für Einspritzbeginn-Grundwerte (SBGWd) für niedrige Schadstoffemission im Abgas für eine dynamische Betriebsart, in der die Motorlast (Q) signifikant wechselt, dadurch gekennzeichnet, daß das Umschalten von der statischen Betriebsart in die dynamische Betriebsart so allmählich erfolgt, daß der Einspritzbeginn nur allmählich varriert.

2. Vorrichtung nach Anspruch 1, gekennzeichnet durch eine Vorrichtung (24) zum Feststellen des Betrages der Änderungsrate (dQ/dt) der Last und einen Komperator (28), der bei einem Betrag der Änderungsrate (dQ/dt) der Last über einem relativ niedrigen Mindestwert zum Umschalten von einem Grundwert (SBGWs) auf den anderen Grundwert (SBGWd) und umgekehrt anspricht.

3. Vorrichtung nach Anspruch 2, dadurch gekennzeichnet, daß ein Tiefpass (70) auf der Eingangsseite des Komparators (28) angeordnet ist, damit letzterer nicht auf kurzzeitige Änderungen der Last reagiert.

4. Vorrichtung nach einem der obigen Ansprüche, dadurch gekennzeichnet, daß eine Temperaturkorrektur (Kt) des Grundwerts (SBGWs oder SBGWd) beim Ermitteln des Sollwertes (SB$_{des}$) erfolgt.

5. Vorrichtung nach einem der obigen Ansprüchen, dadurch gekennzeichnet, daß eine Höhenkorrektur (Kp) des gelieferten Grundwert (SBGWs oder SBGWd) beim Ermitteln des Sollwertes (SB$_{des}$) erfolgt.

6. Vorrichtung nach einem der obigen Ansprüchen, dadurch gekennzeichnet, daß eine Steuerung des Motor-Regelparameters (SB) vorgesehen ist, wenn kein Rückkopplungssignal oder Istwert (SB$_{act}$) zum Vergleich mit dem Sollwert (SB$_{des}$) vorliegt, in einem geschlossenen Regelkreis der einen Regler (108) beinhaltet, insbesondere einen PI-Regler zum Regeln eines Ausgangsservos (110), der den Regelparameter (SB) anpasst.

7. Vorrichtung nach Anspruch 6, dadurch gekennzeichnet, daß die antizipatorische Regelung (114) ebenfalls eine Vorrichtung nach einen der Ansprüche 1 bis 6 umfasst.

8. Vorrichtung nach Anspruch 6 oder 7, dadurch gekennzeichnet daß die antizipatorische Regelung für den Startfall ein abgespeichertes Kennfeld enthält, zum Erzeugen eines Sollwertes des Motor-Regelparameters (SB) in Abhängigkeit von zumindest einem Motorbetriebsparameter (Q,T).

## Revendications

1. Dispositif pour générer une valeur de paramètre d'injection désirée (SB$_{des}$) d'un moteur à combustion interne équipé avec une commande électronique, comportant des branches (30, 32) contenant respectivement des mémoires dans lesquelles sont mémorisées des zones caractéristiques (20, 22) afférentes à des valeurs de paramètre d'injection de base différent (SBGWs, SBDWd) pour des modes d'opération différents du moteur en concordance avec au moins un paramètre de fonctionnement du moteur (Q, n), au moins une branche (30 ou 32) comportant un dispositif arithmétique (40) pour basculer d'un mode opératoire à l'autre, une première zone caractéristique mémorisée (20) procure une valeur de paramètre d'injection de base (SBGWs) pour une consommation optimum de gazole d'un mode statique dans lequel la puissance du moteur (Q) est constante ou ne varie que légèrement, et une seconde zone caractéristique mémorisée (22) procure une valeur de paramètre d'injection de base (SBGWd) pour un minimum de pollution de gaz d'échappement pour un mode dynamique dans lequel la puissance du moteur (Q) est modifiée significativement, caractérisé en ce que le basculement du mode statique au mode dynamique est graduel de sorte que la valeur des paramètres d'injection ne change que graduellement.

2. Dispositif selon la revendication 1 caractérisé en ce qu'il comporte un dispositif (24) pour mesurer l'ampleur de la vitesse de modification ($\frac{dQ}{dt}$) de la puissance et un comparateur (28) pour, en réponse à une ampleur de la vitesse de changement ($\frac{dQ}{dt}$) de la puissance supérieure à un minimum relativement bas, changer d'une valeur de base (SBGWs) à l'autre (SBGWd) et vice versa.

3. Dispositif selon la revendication 2 caractérisé en ce qu'un filtre passe-bas (70) est disposé à l'entrée du comparateur (28) pour éviter que ce dernier ne réagisse à une modification de la puissance du moteur trop courte.

4. Dispositif selon l'une quelconque des revendications précédentes caractérisé en ce qu'une correction de température (Kt) est effectuée sur la valeur de base fournie (SBGWs ou SBGWd) lors de la détermination de la valeur désirée (SB$_{des}$).

5. Dispositif selon l'une quelconque des revendications précédentes caractérisé en ce qu'une correction d'altitude (Kp) est effectuée sur la valeur de base fournie (SBGWs ou SBGWd) lors de la détermination de la valeur désirée (SB$_{des}$).

6. Dispositif selon l'une quelconque des revendications précédentes caractérisé en ce qu'un contrôle anticipatoire ou by-pass (114) est mis en oeuvre au moyen d'une boucle ouverte pour procurer un paramètre de commande du moteur (SB) lorsqu'aucun signal de retour ou valeur réelle ($SB_{act}$) n'est disponible pour être comparé avec la valeur désirée ($SB_{des}$) dans une boucle d'asservissement fermée comportant un contrôleur (108), particulièrement un contrôleur PI, pour contrôler une servocommande de sortie (110) laquelle effectue le réglage du paramètre de commande (SB).

7. Dispositif selon la revendication 6 caractérisé en ce que le contrôle anticipatoire (114) lui-même comporte également un dispositif selon l'une quelconque des revendications 1 à 6.

8. Dispositif selon la revendication 6 ou 7 caractérisé en ce que le contrôle anticipatoire comporte une zone caractéristique mémorisée pour générer une valeur désirée du paramètre de commande du moteur (SB) en réponse à au moins un paramètre de fonctionnement du moteur (Q, T) au moment du démarrage.

_Fig 1_

_Fig 2_

EP 0 436 553 B1

Q

n

20 — SB STAT

$SBGW_s$  30  $+$  38  $-$  $SBGW_s - SBGW_d$  40

$c\,'$

$\triangle_{SB_s}$

$+SB_{des}$

22 — SB DYN

$SBGW_d$  32

24  $\dfrac{d}{dt}$  $\dfrac{dQ}{dt}$  26  $\left|\dfrac{dQ}{dt}\right|$  28  $k$  34

$k0 \rightarrow 1$

$k1 \rightarrow 0$

$-$  36  $+$  1

$+$  42a

*Fig 3*

28a  $\left|\dfrac{dQ}{dt}\right|$  $k'$  34a

$k'1 \rightarrow 0$

$t$

$k'0 \rightarrow 1$

$c\,'$

*Fig 4*

*Fig_5.*

Fig 6

_Fig 7_